# EUROPEAN PATENT SPECIFICATION

(11) **EP 3 883 829 B1**
(45) Date of publication and mention of the grant of the patent: **07.01.2026**
(21) Application number: 19886209.6
(22) Date of filing: 19.11.2019
(51) Int. Cl.: B60T 17/04, B60T 11/10, B60T 8/36

(54) **A MOTOR VEHICLE AND A SUPPORT MEMBER FOR A BRAKE UNIT THEREOF**
KRAFTFAHRZEUG UND TRÄGERELEMENT FÜR EINE BREMSEINHEIT DAFÜR
VÉHICULE À MOTEUR ET ÉLÉMENT DE SUPPORT POUR UNE UNITÉ DE FREINAGE DE CELUI-CI

(30) Priority: 19.11.2018 IN 201841043451
(43) Date of publication of application: 29.09.2021
(73) Proprietor: TVS Motor Company Limited, Chennai 600006 (IN)
(72) Inventor: MOHAN, Shanmugam, Chennai 600 006 (IN); SHARMA, Praveen Kumar, Chennai 600 006 (IN); GANESAN, Thangavelu, Chennai 600 006 (IN); VENKATA MANGA RAJU, Karnam, Chennai 600 006 (IN)
(74) Representative: Patentanwaltskanzlei Matschnig & Forsthuber OG
(86) International application number: PCT/IN2019/050856
(87) International publication number: WO 2020/105067

(56) References cited:
- EP-A1- 2 949 526
- EP-A1- 2 949 526
- WO-A1-2018/096493
- DE-A1- 102012 209 181
- US-A1- 2010 264 723
- US-A1- 2010 264 723

## Description

### TECHNICAL FIELD

The present subject matter relates to a motor vehicle and a support member with a brake unit.

### BACKGROUND

Generally, two-wheeled or three-wheeled motor vehicles are employed with braking system that enables the user to control the speed of the vehicle, especially to reduce the speed and/or to bring the vehicle to halt. Braking system of the vehicle is one of the safety features of the vehicle. However, due to varying driving practices and driving & environment conditions, there is possibility of occurrence of excessive braking or under braking by the user, which may lead to unwarranted operating condition of the vehicle. In the light of the aforementioned and other situations, with the advancement in technology, various braking systems have come into light that are aimed at providing improved braking performance. For example, there are systems like interlocking braking system that transmits braking force to more than one-wheel upon application of single brake lever, anti-lock braking system that helps in keeping the wheel from locking even during excessive braking, etc. These braking systems may use a fully hydraulic system or a combination of mechanical & hydraulic system for transmitting braking forces to the wheel(s). Further, the braking system includes a brake control unit that is either electrical or mechanical or which is used along with the hydraulic system. Such braking systems include hoses that may get connected to the control unit.

As per known state of art and in particular WO 2018/096493 A1 of the applicant, a bracket with several arm members, each featuring a U-shaped cutout oriented in a specific direction to receive intermediate connectors or banjo fittings with a specific orientation, in order to prevent incorrect assembly of multiple hoses to banjo joints. However, this bracket, having multiple arms, forms a cantilever structure. This configuration allows for greater movement at the free end, making the structure more responsive to dynamic loads.

In DE 102012209181 A1 a hydraulic distributor assembly for a braking system is described.

### SUMMARY OF INVENTION

The invention is directed at a motor vehicle as claimed in claim 1 and a support member with a brake unit for a motor vehicle as claimed in claim 10. The dependent claims describe further optional features of the invention.

### BRIEF DESCRIPTION OF THE DRAWINGS

The detailed description is described with reference to the accompanying figures. The same numbers are used throughout the drawings to reference like features and components.
Fig. 1 illustrates a right side view of an exemplary motor vehicle, in accordance with an embodiment of the present subject matter.
Fig. 2 illustrates a right side view of a frame member of the motor vehicle with selected parts thereon, in accordance with the embodiment of Fig. 1.
Fig. 3 (a) depicts an isometric enlarged view of the brake unit secured to the frame member through a support member, in accordance with the embodiment of Fig. 2.
Fig. 3 (b) depicts another isometric view of the frame member with the support member shown in exploded view, in accordance with an embodiment.
Fig. 4 illustrates a brake unit supported by the support member, in accordance with the embodiment of Fig. 3 (a).
Fig. 5 depicts an exploded view of brake unit from the support member, in accordance with the embodiment of Fig. 4.
Fig. 6 depicts an isometric view of the support member, in accordance with the embodiment of Fig. 4.
Fig. 7 depicts a cut-sectional view of the support member along with the brake unit and hydraulic joints, in accordance with the embodiment of Fig. 4.
Fig. 8 depicts a top perspective view of a brake unit mounted to the motor vehicle, in accordance with a second embodiment of the present subject matter.
Fig. 9 depicts a top view and an exploded view of the brake unit assembly, in accordance with yet another embodiment of the present subject matter.

### DETAILED DESCRIPTION

Generally, the brake control unit, simply referred to as 'brake unit', for example say ABS control unit, is provided with inlet and outlet port(s), which are connected to hoses or hydraulic pipes through which the brake unit regulates the hydraulic fluid effecting brake operation. However, the hoses or hydraulic pipes used at the inlet and the outlet ports may get swapped resulting in wrong hydraulic connection between the inlet and outlet with a master cylinder and a brake caliper, respectively. The same problem may also happen between front and rear brake circuits. Such wrong connection leads to failure of the braking system, causing safety concerns, without even indicating any warning signal to the user or service personnel as this failure cannot be recognized by the brake unit.

Further, the wrong hydraulic connection results in poor control in pressure (fluid) modulation as during such wrong connection the pressure is only regulated at master cylinder, but not at the brake caliper. Thus, fluid-pressure will be released only from master cylinder, but not from caliper. Thus, the control unit cannot recover corresponding wheel from severe braking that may lead to wheel skidding/rear wheel lift off due to wheel getting locked or over braking. Further, the wrong connection would result in fluid getting dumped into the brake caliper instead of the master cylinder. This results into a severe concern in road safety as such failure may be diagnosed only during operation of the vehicle and the user may have very less time to react resulting in catastrophic accidents.

Typically, the braking system assembly & calibration like the ABS system is initially carried out at factory, and the hydraulic connections may be assembled properly with due care. However, in the field and at dealer end, during servicing or other conditions, there is higher probability of occurrence of wrong connections resulting in interchange of inlet and outlet ports connection at the brake unit, which becomes a major challenge. While ABS type systems aim to provide a fail-safe solution to the user of the vehicle, it is essential to ensure that the system design functions are in a fool proof manner to be able to achieve a fail-safe scenario.

Certain solutions were proposed in the art to address the aforementioned problems. For example, by provision of visual markings/ identifications on the control unit. However, such visual markings do not prevent any wrong connections in hydraulic circuit owing to inexperience of service personnel, negligence, and even due to urgency. Thus, such a solution cannot be considered fool proof. Moreover, some other solutions in the art propose provision of inlet and outlet ports with different sizes. Yet, such different port sizes in hydraulic inlet and outlet in vehicles like two-wheeled or three-wheeled vehicle poses challenge to use a light weight brake unit owing to compact packaging requirements in two-wheeled or three-wheeled motor vehicles. Moreover, additional challenge is to make different port sizes resulting in higher tooling cost, multiple tools which is not economical. Also, procurement of such different parts is not feasible & can also lead to excess assembly time owing to variety. Conventionally, a separate plate may be used to avoid wrong assembly. However, such plate is also prone to be missed out or eliminated during assembly or during service. Moreover, this plate requires extra mounting onto the frame or on the control unit requiring fasteners. Also, such an assembly is time consuming due to presence of multiple parts and additional operation.

Moreover, the hydraulic ports are prone to receive tool hits during assembly or servicing of adjacent parts like engine etc. because of which the hydraulic ports at the joining portion to the brake unit tend to loosen up resulting in formation of loose joints. Any such loosening of hydraulic joints would affect the hydraulic-joint sealing characteristics, leakage, or pressure drop occurs because of which the braking force may vary resulting in unwarranted braking.

Thus, the conventional designs do not provide a foolproof assembly of the brake unit on to the vehicle. Hence, there is need for a system that enables the ports of the hydraulic system to be assembled onto the control unit in a fool proof manner even when assembled by inexperienced service personnel and at the same time the system should be cost effective without involving any additional tooling and extra parts.

Hence, the present subject matter provides a motor vehicle comprising one or more wheels. The motor vehicle is provided with a brake unit capable of applying braking force on the one or more wheels through two or more brake hoses or hydraulic pipes. The brake unit is secured to the motor vehicle though a support member. The support member is adapted to accommodate the two or more brake hoses, being functionally connected to said brake unit, at a pre-determined location/port of the brake unit and with pre-determined paths.

The brake unit includes one or more inlet and one or more outlet ports and the support member enables assembly of hydraulic connection through hoses or hydraulic pipes to the inlet and outlet ports eliminating any wrong assembly therebetween. Also, the present subject matter enables use of hydraulic ports having identical diameter as the support member is capable of supporting the brake unit and is also adapted to accommodate at least an inlet brake hose of the two or more brake hoses at a pre-determined position on the brake unit, and at least an outlet brake hose at a pre-determined position on the brake unit.

It is an aspect that the support member is a single piece member that supports the brake unit on the vehicle and also guides the hydraulic pipes at the vicinity of the inlet and outlet portions whereby the possibility of missing of any additional parts during assembly of the system that prevents wrong assembly is eliminated.

It is a feature that the support member includes a support portion and an alignment portion integrally formed. The alignment portion is provided with one or more with hydraulic hose-accommodating spaces having a profile matching with a profile of the hydraulic pipes at the connecting portion, wherein only the structural profile of the hydraulic pipe that matches with the profile/path of hydraulic hose-accommodating space can be assembled thereat.

The hydraulic hose-accommodating space can be a hole, an elongated hole, slot or a guide. In a preferred embodiment, the hydraulic hose-accommodating space is a hole/elongated hole as it reduces material and weight thereby reducing cost.

It is another aspect of the present subject matter that the support member controls different orientations of hydraulic hoses/pipes connected to brake unit.

It is feature of the present subject matter that the support member enables correct assembly of the hoses or hydraulic pipes to the brake unit during assembly at the factory and also at the service end without the need for any additional training of service personnel.

It is an aspect of the present subject matter that the alignment and correct assembly of the hoses is done without need for any extra parts like an additional part, mountings, joints etc. whereby the additional time for assembly of additional such additional parts is also eliminated.

It is an effect of the present subject matter that worst or uncontrollable instability issue due to wheel skidding/ rear wheel lift off due to failure of brake unit upon wrong assembly of the hoses is eliminated.

It is a feature of the present subject matter that the difficulty during assembly due to tolerances is reduced as the support member and guiding member are made as a single part.

The brake unit can be an anti-lock brake system (ABS) control unit, an interlocking brake system control unit that applies braking force on more than one wheel, or interlocking anti-lock brake system, which have two or more brake hoses. The braking system can be a disc brake or drum brake that use fully hydraulic or a combination of mechanical and hydraulic system for transmitting braking force.

The present subject matter is applicable to single channel or multi-channel ABS system with banjo connections/non-banjo/ISO/JASO connectors. Thus, the present subject matter is applicable to two-wheeled motor vehicles, three-wheeled motor vehicles, and other similar multi-wheeled motor vehicle.

The present subject matter along with all the accompanying embodiments and their advantages would be described in greater detail in conjunction with the figures in the following paragraphs.

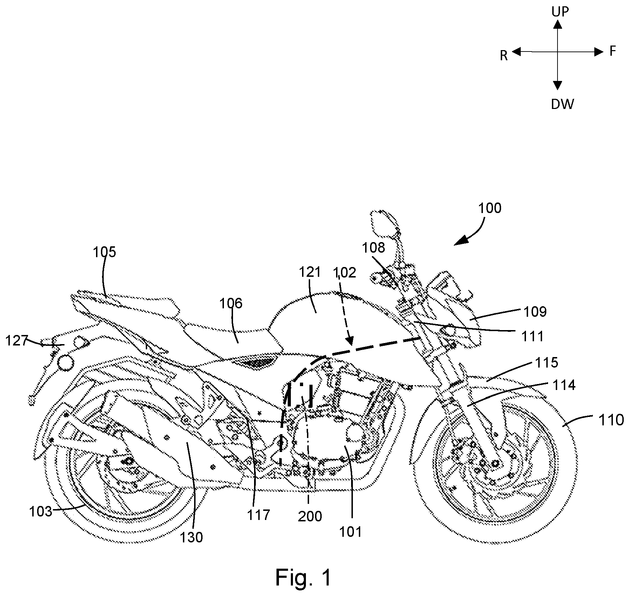

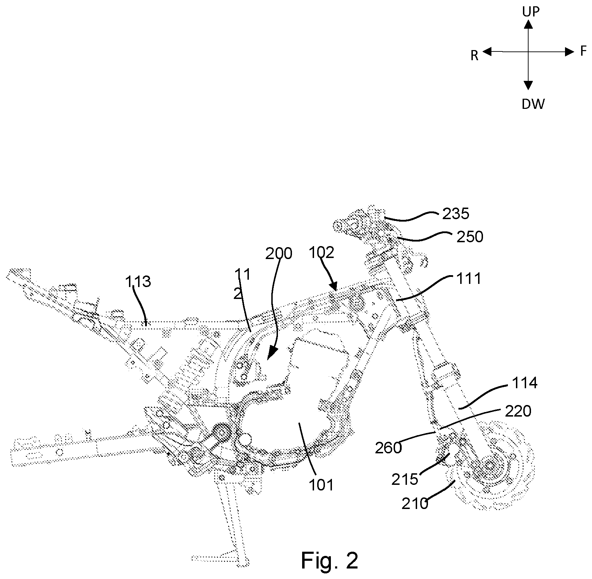

Fig. 1 illustrates a two-wheeled vehicle (100), which is an exemplary motor vehicle, having an IC engine (101) that is vertically disposed. Fig. 2 illustrates a side view of a frame member (102) of vehicle with selected parts thereon, in accordance with an embodiment of the embodiment of the present subject matter. Preferably, the IC engine (101) is a single-cylinder type IC engine. The two-wheeled vehicle comprises a front wheel (110), a rear wheel (103), the frame member (102), a fuel tank (121) and seat (106). The frame member (102) includes a head pipe (111), a main tube (112) (shown in Fig. 2), a down tube (not shown), and seat rails (not shown). The head pipe (111) supports a steering shaft (not shown) and two telescopic front suspension(s) (114) (only one shown) that is attached to the steering shaft through a lower bracket and upper bracket (not shown). The two telescopic front suspension(s) (114) support the front wheel (110). The upper portion of the front wheel (110) is covered by a front fender (115) mounted to the lower portion of the telescopic front suspension (114) at the end of the steering shaft. A handlebar (108) is fixed to upper bracket (not shown) and can rotate to both sides.

A head light (109), a visor guard (not shown) and instrument cluster (not shown) are arranged on an upper portion of the head pipe (111). The down tube may be located in front of the IC engine (101) and extends slantingly downward from head pipe (111). The main tube (112) at least partially surrounds the IC engine (101) and extends rearward from head pipe (111). The IC engine (101) is mounted at the front by the down tube and connects the rear of the IC engine (101) at the rear portion of the main tube.

A fuel tank (121) is mounted on the horizontal portion of the main tube (112). Seat rails are joined to main tube and extend rearward to support a seat (106). A rear swing arm (not shown) is connected to the frame member (102) to swing vertically, and a rear wheel (103) is connected to rear end of a rear swing arm (not shown). Generally, the rear swing arm is supported by a mono rear suspension (117) (as illustrated in the present embodiment) or two suspensions on either side of the two-wheeled vehicle. A tail light unit (not shown) is disposed at the end of the two-wheeled vehicle at the rear of the seat (106). A grab rail (105) is also provided on the rear of the seat rails. The rear wheel (103) arranged below seat (106) rotates by the driving force of the IC engine (101) transmitted through a chain drive (116) from the IC engine (101). A rear fender (127) is disposed above the rear wheel (103).

As shown in Fig. 2, the frame member (102) supports a brake unit (200), which can be an anti-lock brake system (ABS) control unit. In the depicted embodiment, the brake unit (200) is mounted to a main tube (112) of the frame member (102), wherein the main tube (112) extends rearward from the head pipe (111) and extend downward at least partially enclosing the IC engine (101). The ABS control unit may comprise of Hydraulic Control Unit (HCU) and an electronic control unit (ECU) or a hydraulic electronic control unit (HECU). The brake unit (200) comprises of one or more brake hose(s) (250, 260) configured to receive hydraulic fluid pressure from an actuator, which can be a hand lever actuated master cylinder (235) or foot pedal actuated master cylinder. The actuator enables to deliver hydraulic fluid pressure to one or more brake caliper(s) (215) to perform braking function on the wheel(s) (103 or 110). Further, the wheel(s) (110) are provided with a sensor ring (not shown) that rotates along with the wheel (110) that helps in determining the real time rotational speed of the wheel (110). The brake unit (200) depending on the determined wheel speed and wheel speed pattern reduces the braking force acting on the brake calipers (215) by relieving hydraulic fluid from brake unit (200) thereto.

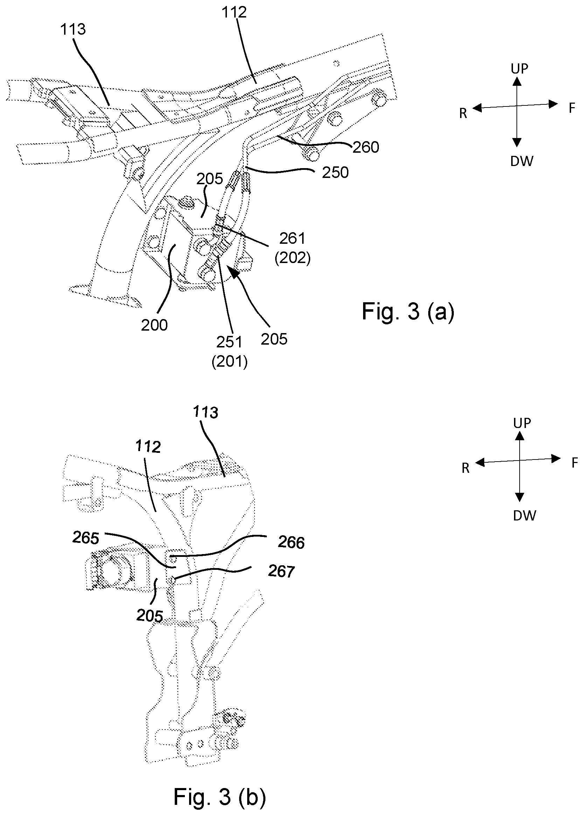

In one embodiment, the brake unit (200) is optimally mounted to the motor vehicle (100) to be electrically connected to a power providing unit like battery or the IC engine (101) and at the same time to the wheel (110) of the vehicle (100). The brake unit (200) is supported by a support member (205) (shown in Fig. 3 (a)) and the support member (215) is mounted to the frame member (102) of the vehicle (100) through a bracket (265) (shown in Fig. 3 (b)).

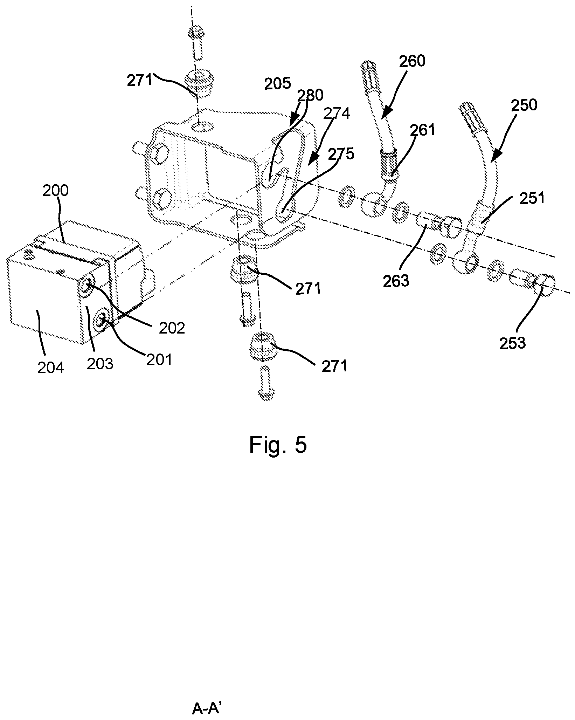

Fig. 3 (a) depicts an enlarged view of brake unit (200) secured to the frame member (102) through a support member (205). Fig. 3 (b) depicts an exploded view of the support member (205). The brake unit (200) comprises one or more inlet port(s) (201), receiving hydraulic fluid from the master cylinder (235), and an outlet port (202) through which hydraulic fluid pressure is applied to the brake calipers (215). The brake unit (200) is connected to the master cylinder (235), which is mounted to the handle bar (108) in the depicted embodiment, through an inlet brake hose (250). The brake caliper (215), which is secured to the front suspension (114) in the depicted embodiment, is connected to the brake unit (200) through an outlet brake hose (260). Each of the inlet brake hose (250) and the outlet brake hose (260) are hydraulic lines including rigid pipe, flexible hose portions, banjo end-connectors and banjo bolts (253, 263) (shown in Fig. 5) along with banjo washers (not shown). Thus, the brake unit (200), during application of the brake, receives the hydraulic fluid pressure from the master cylinder (235) and provides output to the brake caliper (215) for application of the brake.

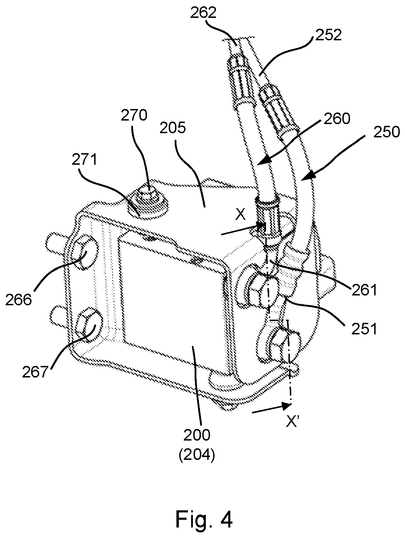

Fig. 4 depicts another enlarged view of the brake unit (200) mounted to the support member (205). The brake unit (200) is detachably-secured to the support member (205) by using securing means like fasteners (270). Additionally, cushioning members (271) are provided between the brake unit (200) and the support member (205) to isolate any vibrations between the frame member (102) and the brake unit (200). Further, the support member (205) along with the brake unit (200) is also detachable from the vehicle (100). The support member (205) includes a mounting portion through which it is secured to the frame member (102) of the vehicle through fastening means (266, 267).

The brake unit (200) includes a body portion (204) through which the brake unit (200) is secured to the support member (205). The body portion (204) of the brake unit (200) includes one or more face(s) and the inlet port (201) and the outlet port (202) (shown in Fig. 5) which are provided on at least one face of the body portion (204). In the embodiment as shown in Fig. 5, the inlet port (201) and the outlet port (202) are provided on a first lateral face (203) of the brake unit (200).

The inlet brake hose (250) includes a first end portion (not shown) acting as one end and a second end portion (251) acting as other end, wherein the first end portion is connected to the master cylinder (235) and the second end portion (251) is connected to the brake unit (200). Similarly, the outlet brake hose (260) includes a third end portion (261) acting as one end and a fourth end portion (not shown) acting as other end, wherein the third end portion (261) is connected to the brake unit (200) and the fourth end portion is connected to the brake caliper (215). The first end portion and the second end portion (251) of the inlet brake hose (250) are connected using a first intermediate hose (252) and the third end portion (261) and the fourth end portion of the outlet brake hose (260) are connected using a second intermediate hose (262). The first intermediate hose (252) and the second intermediate hose (262) in the present embodiment are routed along the main tube (112) of the frame member (102) and are at least partially rigid type. However, the intermediate hoses (252, 262) can be flexible type depending on the application.

In another embodiment, the brake unit can be a multi-channel type system that includes two or more inlet hoses and two or more outlet hoses that are connected to two or more wheels of the motor vehicle.

Further, the third end portion (261) of the outlet brake hose (260) and the second end portion (251) of the inlet brake hose (250) are made of rigid material. For example, the third end portion (261) and the second end portion (251) are banjo type connectors. The brake unit (200) is secured to the motor vehicle (100) through the support member (205), and the support member (205) is also adapted to accommodate two or more brake hoses (250, 260), being functionally connected to the brake unit (200), at a pre-determined location thereof and with unique pre-determined paths for each of the banjo connections viz. second end portion (251), and third end portion (261). In other words, the support member (205) is adapted to accommodate at least an inlet brake hose (250) of the said two or more brake hoses (250, 260) at a first pre-determined position on the brake unit (200), and at least an outlet brake hose (260) at a second pre-determined position on the brake unit (200).

For example, the body portion (204) of the brake unit (200) includes the inlet port (201) that would be the first pre-determined position for assembling the inlet brake hose (250) thereat and the second pre-determined position that would be the second pre-determined position for assembling the outlet brake hose (260) thereat.

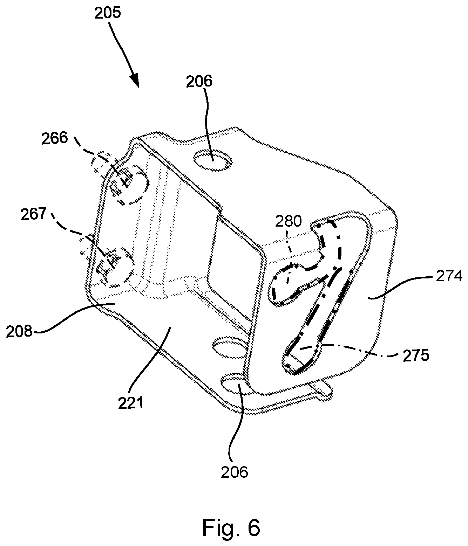

Fig. 5 depicts an exploded view of the assembly including the brake unit (200). Fig. 6 depicts an enlarged view of the support member, in accordance with the embodiment as depicted in Fig. 4. The support member (205) includes one or more hydraulic hose-accommodating space (275) and one or more hydraulic hose-accommodating space (280), corresponding to the inlet brake hose (250) and the outlet brake hose (260), that are capable of enabling only a pre-determined banjo type joint to be assembled at the respective hydraulic hose-accommodating space (275 or 280).

In the present embodiment, the brake unit (200) is connected with the inlet brake hose (250) and the outlet brake hose (260) through their second end (portion (251) and the third end portion (261) respectively. Accordingly, the support member (205) is also provided with a two hose-alignments portions (275, 280). The hydraulic hose-accommodating spaces (275, 280) are provided such that they align with the ports (201, 202) of the brake unit (200). The two hose-accommodating spaces (275, 280) (also depicted in Fig. 6) according to the depicted embodiment are provided on an alignment portion (274), which is integrally formed with the support member (205).

In one embodiment, the support member (205) is made of rigid sheet metal that is at least partially surrounding the brake unit (200). The support member (205) can be oriented in multiple planes to align with the multiple faces of the brake unit (200). Further, in one implementation (as shown in Fig. 5), the second end portion (251) and the third end portion (261) are made of rigid material and are having a dissimilar profile. For example, the second end portion (251) is having a substantially straight profile and the third end portion (261) is having a substantially a curved profile so as to be dissimilar. The inlet hydraulic hose-accommodating space (275) is adapted to match the profile of the second end (portion (251), which is substantially straight in the present embodiment, of the inlet brake hose (250) so as to accommodate only the inlet brake hose (250) at the inlet port (201). Similarly, the outlet hydraulic hose-accommodating space (280) is adapted to match the profile of the third end portion (261) of the outlet brake hose (260), which is substantially curved in the present embodiment, so as to receive only the outlet brake hose (260) at the second port (202) whereby the possibility of any wrong assembly of the hoses to the brake unit is completely eliminated.

The profiles of the second end portion (251) and the third end portion (261) is not restricted to the aforementioned profiles and may include any known geometrical regular or irregular profile such that they are dissimilar or unique.

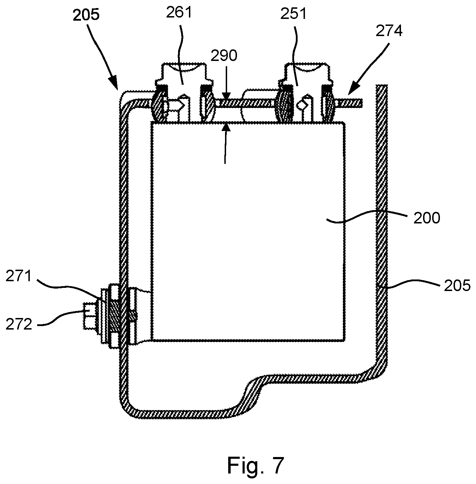

The support member (205) as depicted in accordance with the embodiment of Fig. 6 includes a support portion (221) at which the brake unit gets mounted/secured. The brake unit (200) is secured to the support portion (221) through one or more apertures (206) provided on the support portion (221) using fasteners (272) (shown in Fig. 7) like bolts. The support member (205) includes the alignment portion (274) integrally formed that enables correct assembly of the hydraulic hoses on the brake unit (205).

Fig. 7 depicts a sectional view of the brake unit (200) assembled to the support member (205). The alignment portion (274) in the present embodiment is a planar portion that is aligned parallel to a first lateral face (203) of the body portion (204) and the alignment portion (274) is provided at a first distance (290) from the first lateral face (203). The first distance (290) provided helps in anti-rotation of the second end portion (251) and the third end portion (261) of the brake hoses (250, 260) during assembly. Further, the first distance (290) avoids any wrong assembly as the elevated alignment portion (274) interferes with the rigid ends (251, 261), as the profile would not match during assembly whereby the support member (205) enables fool proof assembly even during servicing by some unskilled service personnel.

Further, the support member (205) protects the connecting portions viz. the second end portion (251) and the third end portion (261), as the alignment portion (274), which is elevated, at least partially protects the second end portion (251) and the third end portion (261) from impacts during servicing of other parts. Thus, the weak zones, which are connecting portions, that may be loosened or damaged during any impacting acting on them during servicing of adjacent parts like the IC engine (101), which could result in leakage or loss of pressure at the connecting portion is reduced making the system reliable.

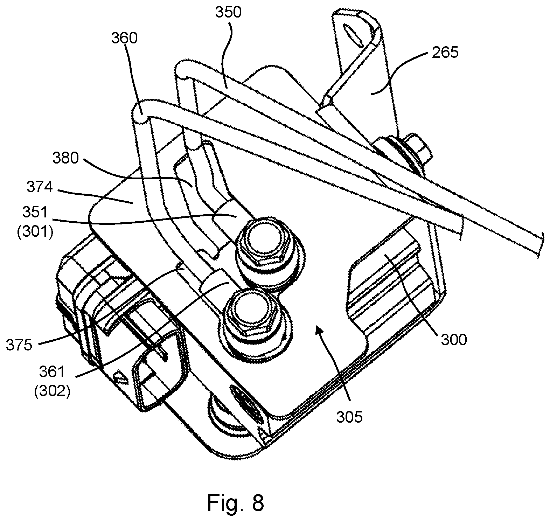

Fig. 8 depicts an enlarged top perspective view of a brake unit (300) mounted to the motor vehicle, in accordance with a second embodiment of the present subject matter. The brake unit (300) in the depicted embodiment is secured to the main tube (not shown) using a support member (305), wherein the support member (305) is secured to the main tube through a lateral side of the support member (305). In the present embodiment, the support member (305) is a U-shaped or C-shaped member, which is made of rigid material. Thus, the support member can have any known regular or irregular geometric in order to enable mounting and fool proof assembly. The brake unit (300) in the present embodiment is provided with ports (301, 302) on an upper facing side thereof. The support member (305) can be made of a sheet metal bent into the desired profile, by casting, by extrusion, or by any known process. The brake system includes two or more brake hoses (350, 360). The support member includes an inlet hydraulic hose-accommodating space (375) and an outlet hydraulic hose-accommodating space (380), corresponding to an inlet brake hose (350) and an outlet brake hose (360), wherein the support member (305) is capable of enabling only a pre-determined hose to be assembled at the respective accommodating spaces (375 or 380). Thus, out of the two or more brake hoses (350, 360) at least an inlet brake hose (350) would be assembled at a pre-determined position on the brake unit (300) and at least an outlet brake hose (360) would be assembled at pre-determined position on the brake unit (300). As per an embodiment, the first pre-determined position and the second pre-determined position can be an inlet port (301) and an outlet port (302), respectively.

Further, the inlet brake hose (350) and the outlet brake hose (360) are provided with a second end portion (351) and a third end portion (361) that are provided with dissimilar profiles or paths such that they align only with the inlet hydraulic hose-accommodating space (375) and the outlet hydraulic hose-accommodating space (380) respectively. Similarly, the inlet hydraulic hose-accommodating space (375) includes a profile dissimilar to a profile of the outlet hydraulic hose-accommodating space (380). Thus, the functional effectiveness of the braking system is retained and at the same time any fatal accidents that may be caused due to wrong assembly of the hoses is eliminated.

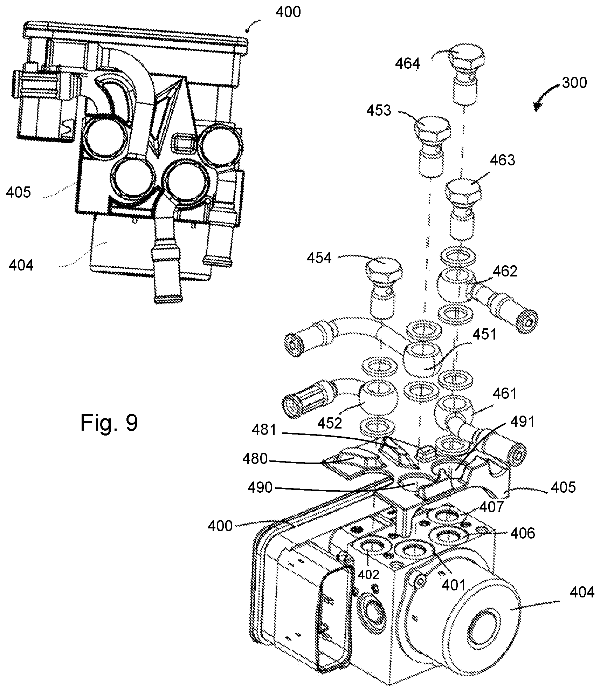

FIG. 9 illustrates a top view and an exploded view view of brake unit (400) with the supprt member (405), in accordance with an embodiment of the present subject matter. In an embodiment, a substantially planar member, for example, the support member (405) is disposed on one of the face of the brake unit (400). The support member (405) ensures that appropriate banjo connection (of the plurality of brake hoses) are coupled to the corresponding port (of the one or more ports) thereby ensuring correct assembly on the brake unit (405). In an embodiment, the support member (405) is disposed in such a manner that upon assembly of one or more end portions of the one or more brake hoses are connected on to the one or more ports.

A first end portion (451), of a brake hose, is connected to a first inlet port (401) disposed on said planar surface of the brake unit (400). In an embodiment, a hollow banjo bolt, for example, a first banjo bolt (453), which allows passage of brake fluid oil from the inlet hydralic brake hose (not shown) to the brake unit (400) is mounted to the brake unit (400) and also ensures that the first end portion (451) is held tightly against the top surface of the brake unit (400) separated by the intermediately disposed support member (405).

Similarly, a second end portion (452) is connected to a second inlet port (402) disposed on the said planar surface of the brake unit (400). A second banjo bolt (454), which allows passage of the brake fluid oil from another inlet hydraulic brake hose (not shwon) into the brake unit (400). A second banjo bolt (454) which allows passage of brake fluid oil from the inlet hydralic brake hose (not shown) to the brake unit (400) is mounted to the brake unit (400) and also ensures that the second end portion (452) is held tightly against the surface of the brake unit (400) separated by the intermediately disposed support member (405).

In a similar manner, a third end portion (461) and a fourth end protion (462) of two outlet hydraluic brake hoses (not shown) are connected to first outlet port (406) and a second outlet port (407), respectively, using a third banjo bolt (463) and a fourth banjo bolt (464). Further, the support member (405) is provided with accomdoating spaces(s) (480, 481, 490, 491) formed by a combination of guides and holes to enable correct assembly of the brake hose end portions (451, 452, 461, 462) on to the corresponding ports (401, 402, 406, 407). As depicted in the current embodiment, the hose-alignemnt spaces can be a combination of holes and guides. Thus, either holes, guides, elongated holes, or a combination of one or more holes, guides, elongated holes may be used.

### List of reference signs:

- 100: vehicle
- 101: IC engine
- 102: frame member
- 103: rear wheel
- 104: tail light unit
- 105: grab rail
- 106: seat
- 107: lower bracket
- 108: handlebar
- 109: head light
- 110: front wheel
- 111: head pipe
- 112: main tube
- 114: front suspension
- 115: front fender
- 116: chain drive
- 117: rear suspension
- 118: swing arm
- 119: front brake
- 121: fuel tank
- 122: rear brake
- 125: visor guard
- 126: seat rails
- 127: rear fender
- 130: muffler body
- 131: perforated tube
- 135: cylinder body
- 140: cylinder head
- 145: exhaust port
- 150: air-fuel supply means
- 160: crankcase
- 165: first cover
- 200\300: brake unit
- 201\ 301\ 401\ 402: inlet port
- 202\ 302\ 406\407: outlet port
- 203: first lateral face
- 204: body portion
- 205\ 305\ 405: support member
- 206: apertures
- 215: brake caliper
- 221: support portion
- 235: master cylinder
- 250\ 350: inlet brake hose
- 251\ 351: second end portion
- 252: first intermediate hose
- 253\ 263: banjo bolts
- 260\ 360: outlet brake hose
- 261\ 361: third end portion
- 262: second intermediate hose
- 265: bracket
- 266\ 267: fastening means
- 270: fasteners
- 271: cushioning members
- 274: aligning portion
- 275\ 375: inlet hydraulic hose-accommodating space
- 280\ 380: outlet hydraulic hose-accommodating space
- 290: first distance

## Claims

1. A motor vehicle (100), said motor vehicle (100) comprising:
one or more wheels (103, 110);
a brake unit (200, 300, 400) having a body portion (204); and
a support member (205, 305, 405), said brake unit (200, 300, 400) being configured to apply braking force on said one or more wheels (103, 110) through two or more brake hoses (250, 260, 350, 360),
said two or more brake hoses (250, 260, 350, 360) including one or more inlet brake hose(s) (250, 350) and one or more outlet brake hose(s) (260, 360),
said one or more inlet brake hose(s) (250, 350) being connected to corresponding one or more inlet port(s) (201, 301, 401, 402) of said brake unit (200, 300, 400) at a pre-determined position on said brake unit (200, 300, 400), and
said one or more outlet brake hose(s) (260, 360) being connected to corresponding one or more outlet port(s) (202, 302, 406, 407) of said brake unit (200, 300, 400) at pre-determined position on said brake unit (200, 300, 400);
wherein said support member (205, 305, 405) is secured to said motor vehicle (100),
is supporting said brake unit (200, 300, 400), and thereby enabling use of one or more hydraulic ports having identical diameter, and **characterized in that** said support member (205,305,405)
is accommodating said one or more inlet brake hose(s) (250, 350) and said one or more outlet brake hose(s) (260, 360) being functionally connected to said brake unit, at said pre-determined position of said brake unit and with one or more pre-determined paths,
wherein said support member (205, 305, 405) includes an alignment portion (274, 374) which is integrally formed with said support member (205, 305, 405) and provided with two or more hydraulic hose-accommodating space(s) (275, 280, 375, 380, 480, 481, 490, 491) corresponding to each of said two or more brake hoses (250, 260, 350, 360), and each of said two or more hydraulic hose-accommodating space(s) is configured with a profile to accommodate each of said two or more brake hoses (250, 260, 350, 360) at corresponding said hydraulic hose-accommodating space(s) (275, 280, 375, 380, 480, 481, 490, 491), to prevent interchanged connection of each of said brake hoses (250, 350, 260, 360) corresponding to each of said ports (201, 301, 202, 302, 401, 402, 406, 407) of said brake unit (200, 300, 400), enabling correct assembly of hydraulic hoses on said brake unit (205), said alignment portion (274) being a planar portion aligned parallel to a first lateral face (203) of said body portion (204) and said alignment portion (274) is provided at a first distance (290) from said first lateral face (203).

2. The motor vehicle (100) as claimed in claim 1, wherein said two or more hydraulic hose-accommodating spaces (275, 280, 375, 380) includes one or more inlet hydraulic hose-accommodating space(s) (275, 375) and one or more outlet hydraulic hose-accommodating space(s) (280, 380),
said one or more inlet hydraulic hose-accommodating space(s) (275, 375) and said one or more outlet hydraulic hose-accommodating space(s) (280, 380) being adapted to accommodate said one or more inlet brake hose(s) (260, 360) and said one or more outlet brake hose(s) (260, 360), respectively,
wherein each of said one or more inlet hydraulic hose-accommodating space(s) (275, 375) and said one or more outlet hydraulic hose-accommodating space(s) (280, 380) define said pre-determined path corresponding to each of said one or more inlet brake hose(s) (250, 350) and each of said one or more outlet brake hose(s) (260, 360).

3. The motor vehicle (100) as claimed in claim 2, wherein said one or more inlet brake hose(s) (250, 350) includes a first end portion and a second end portion (251, 351), said second end portion (251, 351) being configured to have a structural profile matching with said path defined by corresponding said inlet hydraulic hose-accommodating space(s) (275, 375) to accommodate said second end portion (251, 351), and
said outlet brake hose (260, 360) includes a fourth end portion and a third end portion (261, 361), said third end portion (261, 361) being configured to have a structural profile matching with said path defined by corresponding said outlet hydraulic hose-accommodating space(s) (275, 375) to accommodate said third end portion (261, 361), and
wherein each of said second end portion (251, 351) and each said third end portion (261, 361) of each said inlet brake hose (250, 350) and each said outlet brake hose (260, 360), respectively being connected to a break unit (200, 300, 400).

4. The motor vehicle (100) as claimed in claim 1, wherein said brake unit (200, 300, 400) includes two or more ports (201, 202, 301, 302, 401, 402, 406, 407), said two or more ports includes one or more inlet port(s) (201,301,401,402), and one or more outlet port(s) (202,302,406,407),
said two or more ports (201, 202, 301, 302, 401, 402, 406, 407) being provided on said first lateral face (203), wherein said support member (205, 305, 405) at least partially covers said brake unit (200, 300, 400), and wherein said alignment portion (274, 374) of said support member (205, 305, 405) is configured to align said two or more hydraulic hose-accommodating space(s) (275, 280, 375, 380, 480, 481, 490, 491) with corresponding said two or more ports (201, 202, 301, 303) of said brake unit (200, 300).

5. The motor vehicle (100) as claimed in claim 3, wherein said brake unit (200, 300, 400) is an anti-lock braking system control unit and, each of said one or more inlet brake hose(s) (250, 350) having said first end portion connected to a master cylinder (235) and said second end portion (251, 351) being connected to said brake unit (200, 300), and said each of one or more outlet brake hose(s) (261, 361) having said fourth end portion connected to a brake caliper (215) and said third end portion (261, 361) connected to said brake unit (200, 300, 400), wherein said second end portion (251, 351) and said third end portion (261, 361) are configured to have a dissimilar profile.

6. The motor vehicle (100) as claimed in claim 3, wherein said one or more inlet hydraulic hose-accommodating space(s) (275, 375) is different from said one or more outlet hydraulic hose-accommodating space(s) (280, 380), and
wherein each of said one or more inlet hydraulic hose-accommodating space(s) (275, 375) receives only corresponding said inlet brake hose (250, 350), and
wherein each of said one or more outlet hydraulic hose-accommodating space(s) (280, 380) receives only corresponding said outlet brake hose (260, 360).

7. The motor vehicle (100) as claimed in claim 1, wherein said support member (205, 305, 405) is at least one of a closed or an open structure, and said support member (205, 305, 405) is made of a rigid material including at least a sheet, extruded, casted, or a molded form.

8. The motor vehicle (100) as claimed in claim 1, wherein said brake unit (200, 300) is mounted to a main tube (112) of the frame member (102), wherein said main tube (112) extends rearward from a head pipe (111) of the frame member (102) and extends downward at least partially surrounding the IC engine (101), and said brake unit (200) is disposed rearward of said IC engine (101).

9. The motor vehicle (100) as claimed in claim 1, wherein said two or more hydraulic hose-accommodating space(s) (275, 375, 280, 380, 480, 481, 490, 491) are formed by a recess, slot, hole, elongated hole, guide, or a combination thereof.

10. A support member (205, 305, 405) with a brake unit (200, 300, 400) for a motor vehicle (100) according to claim 1, **characterized in that** said support member comprises:
a support portion (221), said support portion (221) being configured to support the brake unit (200, 300, 400) of said motor vehicle (100) , thereby enabling use of hydraulic ports having identical diameter; and
an alignment portion (274, 374), said alignment portion (274, 374) being provided with two or more hydraulic hose-accommodating space(s) (275, 280, 375, 380, 480, 481, 490, 491), said alignment portion (274) being a planar portion aligned parallel to a first lateral face (203) of said body portion (204) and said alignment portion (274) is provided at a first distance (290) from said first lateral face (203),
wherein said support portion (221) is integrally formed with said alignment portion (274, 374).

11. The support member (221) with the brake unit (200, 300, 400) as claimed in claim 10, wherein said two or more hydraulic hose-accommodating spaces (275, 280, 375, 380) includes one or more inlet hydraulic hose-accommodating space(s) (275, 375) and one or more outlet hydraulic hose-accommodating space(s) (280, 380), and each of said one or more inlet hydraulic hose(s) accommodating space (275, 375) includes a profile dissimilar to a profile of each of said one or more outlet hydraulic hose-accommodating space(s) (280, 380).

## Patentansprüche

1. Kraftfahrzeug (100), wobei das Kraftfahrzeug (100) aufweist:
ein oder mehrere Räder (103, 110);
eine Bremseinheit (200, 300, 400) mit einem Körperbereich (204); und
ein Halteelement (205, 305, 405),
wobei die Bremsvorrichtung (200, 300, 400) dazu eingerichtet ist, über zwei oder mehr Bremsschläuche (250, 260, 350, 360) Bremskräfte auf das Rad bzw. die Räder (103, 110) auszuüben, wobei
die zwei bzw. mehr Bremsschläuche (250, 260, 350, 360) einen oder mehrere Einlassbremsschläuche (250, 350) und einen oder mehrere Auslassbremsschläuche (260, 360) beinhalten, wobei
der bzw. die Einlassbremsschläuche (250, 350) mit einem oder mehreren korrespondierenden Einlassanschlüssen (201, 301, 401, 402) der Bremsvorrichtung (200, 300, 400) an einer vorbestimmten Position auf der Bremsvorrichtung (200, 300, 400) angeschlossen sind und
der bzw. die Auslassbremsschläuche (260, 360) mit einem oder mehreren korrespondierenden Auslassanschlüssen (202, 302, 406, 407) der Bremsvorrichtung (200, 300, 400) an einer vorbestimmten Position auf der Bremsvorrichtung (200, 300, 400) angeschlossen sind;
wobei das Halteelement (205, 305, 405) an dem Kraftfahrzeug (100) befestigt ist, die Bremseinheit (200, 300, 400) trägt und dadurch die Verwendung eines oder mehrerer Hydraulikanschlüsse mit identischem Durchmesser ermöglicht, und
**dadurch gekennzeichnet, dass** das Halteelement (205, 305, 405)
den bzw. die Einlassbremsschläuche (250, 350) und den bzw. die Auslassbremsschläuche (260, 360) aufnimmt, die funktionsmäßig mit der Bremsvorrichtung an der vorbestimmten Position der Bremsvorrichtung und mit einem oder mehreren vorbestimmten Wegen verbunden sind,
wobei das Halteelement (205, 305, 405) einen Ausrichtungsbereich (274, 374) aufweist, der mit dem Halteelement (205, 305, 405) integral ausgebildet ist und mit zwei oder mehr Hydraulikschlauch-Aufnahmeräumen (275, 280, 375, 380, 480, 481, 490, 491) versehen ist, die jeweils den zwei bzw. mehr Bremsschläuche (250, 260, 350, 360) entsprechen, und jeder der zwei bzw. mehr Hydraulikschlauch-Aufnahmeräume mit einem Profil zur Aufnahme der der zwei bzw. mehr Bremsschläuche (250, 260, 350, 360) in den korrespondierenden Hydraulikschlauch-Aufnahmeräumen (275, 280, 375, 380, 480, 481, 490, 491) konfiguriert ist, um ein vertauschtes Verbinden der Bremsschläuche (250, 350, 260, 360) hinsichtlich den jeweiligen Anschlüssen (201, 301, 202, 302, 401, 402, 406, 407) der Bremsvorrichtung (200, 300, 400) zu verhindern, wodurch eine korrekte Montage der Hydraulikschläuche an der Bremsvorrichtung (205) ermöglicht wird, wobei der Ausrichtungsbereich (274) ein ebener Teilbereich ist, der parallel zu einer ersten Seitenfläche (203) des Körperbereichs (204) ausgerichtet ist und der Ausrichtungsbereich (274) in einem ersten Abstand (290) von der ersten Seitenfläche (203) vorgesehen ist.

2. Kraftfahrzeug (100) nach Anspruch 1, wobei die zwei bzw. mehr Hydraulikschlauch-Aufnahmeräume (275, 280, 375, 380) einen oder mehrere Einlass-Hydraulikschlauch-Aufnahmeräume (275, 375) und einen oder mehrere Auslass-Hydraulikschlauch-Aufnahmeräume (280, 380) beinhalten,
wobei der bzw. die Einlass-Hydraulikschlauch-Aufnahmeräume (275, 375) und der bzw. die Auslass-Hydraulikschlauch-Aufnahmeräume (280, 380) zur Aufnahme des bzw. der EinlassBremsschläuche (260, 360) und des bzw. der Auslassbremsschläuche (260, 360) eingerichtet sind,
wobei der bzw. jeder Einlass-Hydraulikschlauch-Aufnahmeraum (275, 375) und der bzw. jeder Auslass-Hydraulikschlauch-Aufnahmeraum (280, 380) den vorbestimmten Weg korrespondierend mit dem bzw. den Einlassbremsschläuchen (250, 350) und dem bzw. den Auslassbremsschläuche (260, 360) definiert.

3. Kraftfahrzeug (100) gemäß Anspruch 2, wobei der bzw. die Einlassbremsschläuche (250, 350) einen ersten Endabschnitt und einen zweiten Endabschnitt (251, 351) beinhalten, wobei der zweite Endabschnitt (251, 351) ein Strukturprofil aufweisend ausgebildet ist, das mit dem durch den korrespondierenden Einlass-Hydraulikschlauch-Aufnahmeraum (275, 375) definierten Weg zusammenpasst, um den zweiten Endabschnitt (251, 351) aufzunehmen, und
der Auslass-Bremsschlauch (260, 360) einen vierten Endabschnitt und einen dritten Endabschnitt (261, 361) beinhaltet, wobei der dritte Endabschnitt (261, 361) ein Strukturprofil aufweisend ausgebildet ist, das mit dem durch den korrespondierenden Auslass-Hydraulikschlauch-Aufnahmeraum (275, 375) definierten Weg zusammenpasst, um den dritten Endabschnitt (261, 361) aufzunehmen, und
wobei jeder der zweiten Endabschnitte (251, 351) und jeder der dritten Endabschnitte (261, 361) der Einlassbremsschläuche (250, 350) und Auslassbremsschläuche (260, 360) jeweils mit einer Bremseinheit (200, 300, 400) verbunden ist.

4. Kraftfahrzeug (100) gemäß Anspruch 1, wobei die Bremseinheit (200, 300, 400) zwei oder mehr Anschlüsse (201, 202, 301, 302, 401, 402, 406, 407) aufweist, wobei die zwei bzw. mehr Anschlüsse einen oder mehrere Einlassanschlüsse (201, 301, 401, 402) und einen oder mehrere Auslassanschlüsse (202, 302, 406, 407) aufweisen,
wobei die zwei bzw. mehr Anschlüsse (201, 202, 301, 302, 401, 402, 406, 407) an der ersten Seitenfläche (203) vorgesehen sind, wobei das Halteelement (205, 305, 405) die Bremsvorrichtung (200, 300, 400) zumindest teilweise bedeckt, und wobei der Ausrichtungsbereich (274, 374) des Halteelements (205, 305, 405) dazu eingerichtet ist, die zwei bzw. mehr Hydraulikschlauch-Aufnahmeräume (275, 280, 375, 380, 480, 481, 490, 491) mit den entsprechenden zwei bzw. mehr Anschlüssen (201, 202, 301, 303) der Bremseneinheit (200, 300) auszurichten.

5. Kraftfahrzeug (100) gemäß Anspruch 3, wobei die Bremseinheit (200, 300, 400) eine Antiblockier-Bremssystem-Steuereinheit ist und der bzw. jeder Einlassbremsschlauch (250, 350) am ersten Endabschnitt mit einem Hauptbremszylinder (235) und am zweiten Endabschnitt (251, 351) mit der Bremseinheit (200, 300) verbunden ist, und der bzw. jeder Auslassbremsschlauch (261, 361) am vierten Endabschnitt mit einem Bremssattel (215) verbunden ist und am dritten Endabschnitt (261, 361) mit der Bremseinheit (200, 300, 400) verbunden ist, wobei der zweite Endabschnitt (251, 351) und der dritte Endabschnitt (261, 361) unterschiedliche Profil aufweisend ausgebildet sind.

6. Kraftfahrzeug (100) nach Anspruch 3, wobei sich der bzw. die Einlass-Hydraulikschlauch-Aufnahmeräume (275, 375) von dem bzw. den Auslass-Hydraulikschlauch-Aufnahmeräumen (280, 380) unterscheiden und
wobei der bzw. jeder Einlass-Hydraulikschlauch-Aufnahmeraum (275, 375) nur den entsprechenden Einlassbremsleitungsschlauch (250, 350) aufnimmt, und
wobei der bzw. jeder Auslass-Hydraulikschlauch-Aufnahmeraum (280, 380) nur den entsprechenden Auslassbremsleitungsschlauch (260, 360) aufnimmt.

7. Kraftfahrzeug (100) nach Anspruch 1, wobei das Halteelement (205, 305, 405) eine geschlossene und/oder eine offene Struktur aufweist und das Halteelement (205, 305, 405) aus einem starren Material mit zumindest einer plattenartigen, extrudierten, gegossenen oder abgeformten Formgebung besteht.

8. Kraftfahrzeug (100) gemäß Anspruch 1, wobei die Bremsvorrichtung (200, 300) an einem Hauptrohr (112) des Rahmenelements (102) angebracht ist, wobei sich das Hauptrohr (112) sich von einem Lenkkopf (111) des Rahmenelements (102) nach hinten erstreckt und nach unten verläuft, den Verbrennungsmotor (101) zumindest teilweise umgebend, und die Bremsvorrichtung (200) hinter dem Verbrennungsmotor (101) angeordnet ist.

9. Kraftfahrzeug (100) nach Anspruch 1, wobei die zwei bzw. mehr Hydraulikschlauch-Aufnahmeräume (275, 375, 280, 380, 480, 481, 490, 491) durch eine Ausnehmung, einen Schlitz, ein Loch, ein Langloch, eine Führung oder eine Kombination von diesen gebildet sind.

10. Halteelement (205, 305, 405) mit einer Bremseinheit (200, 300, 400) für ein Kraftfahrzeug (100) gemäß Anspruch 1, **dadurch gekennzeichnet, dass** das Halteelement aufweist:
einen Haltebereich (221), welcher Haltebereich (221) zum Tragen der Bremseinheit (200, 300, 400) des Kraftfahrzeugs (100) eingerichtet ist, wodurch die Verwendung von Hydraulikanschlüssen mit identischem Durchmesser ermöglicht wird; und
einen Ausrichtungsbereich (274, 374), wobei der Ausrichtungsbereich (274, 374) mit zwei oder mehr Hydraulikschlauch-Aufnahmeräumen (275, 280, 375, 380, 480, 481, 490, 491) versehen ist, wobei der Ausrichtungsbereich (274) ein ebener Teilbereich ist, der parallel zu einer ersten Seitenfläche (203) des Körperbereichs (204) ausgerichtet ist, und der Ausrichtungsbereich (274) in einem ersten Abstand (290) zu der ersten Seitenfläche (203) vorgesehen ist,
wobei der Haltebereich (221) integral mit dem Ausrichtungsbereich (274, 374) ausgebildet ist

11. Halteelement (221) mit der Bremseinheit (200, 300, 400) gemäß Anspruch 10, wobei die zwei bzw. mehr Hydraulikschlauch-Aufnahmeräume (275, 280, 375, 380) einen oder mehrere Einlass-Hydraulikschlauch-Aufnahmeräume (275, 375) und einen oder mehrere Auslass-Hydraulikschlauch-Aufnahmeräume (280, 380) aufweisen, und der bzw. jeder Einlass-Hydraulikschlauch-Aufnahmeraum (275, 375) ein Profil aufweist, das ungleich dem Profil des bzw. jedes Auslass-Hydraulikschlauch-Aufnahmeraumes (280, 380) ist.

## Revendications

1. Véhicule à moteur (100), ledit véhicule à moteur (100) comprenant :
une ou plusieurs roues (103, 110) ;
une unité de freinage (200, 300, 400) comportant une partie de corps (204) ; et
un élément de support (205, 305, 405),
ladite unité de freinage (200, 300, 400) étant configurée pour appliquer une force de freinage sur ladite ou lesdites roues (103, 110) par l'intermédiaire de deux ou plusieurs flexibles de frein (250, 260, 350, 360),
lesdits deux ou plusieurs flexibles de frein (250, 260, 350, 360) comprenant un ou plusieurs flexibles de frein d'entrée (250, 350) et un ou plusieurs flexibles de frein de sortie (260, 360),
ledit ou lesdites flexibles de frein d'entrée (250, 350) étant raccordés à un ou plusieurs orifices d'entrée correspondants (201, 301, 401, 402) de ladite unité de freinage (200, 300, 400) à une position prédéterminée sur ladite unité de freinage (200, 300, 400), et
ledit ou lesdits flexibles de frein de sortie (260, 360) étant raccordés à un ou plusieurs orifices de sortie correspondants (202, 302, 406, 407) de ladite unité de freinage (200, 300, 400) à une position prédéterminée sur ladite unité de freinage (200, 300, 400) ;
ledit élément de support (205, 305, 405) étant fixé audit véhicule à moteur (100) et supportant ladite unité de freinage (200, 300, 400), ainsi permettant l'utilisation d'un ou plusieurs orifices hydrauliques de diamètre identique, et
**caractérisé en ce que** ledit élément de support (205, 305, 405)
loge ledit ou lesdits flexibles de frein d'entrée (250, 350) et ledit ou lesdits flexibles de frein de sortie (260, 360) reliés de manière fonctionnelle à ladite unité de freinage, à ladite position prédéterminée de ladite unité de freinage et en suivant un ou plusieurs chemins prédéterminés,
ledit élément de support (205, 305, 405) incluant une partie d'alignement (274, 374) qui est formée d'un seul tenant avec ledit élément de support (205, 305, 405) et pourvue de deux ou plusieurs espaces de logement de tuyaux hydrauliques (275, 280, 375, 380, 480, 481, 490, 491) qui correspondent à chacun desdits deux ou plusieurs flexibles de frein (250, 260, 350, 360), et chacun desdits deux ou plusieurs espaces de logement de tuyaux hydrauliques est configuré avec un profil pour loger chacun desdits flexibles de frein (250, 260, 350, 360) auxdits espaces de logement de tuyaux hydrauliques correspondants (275, 280, 375, 380, 480, 481, 490, 491) afin d'empêcher le raccordement interverti de chacun desdits flexibles de frein (250, 350, 260, 360) correspondant à chacun desdits orifices (201, 301, 202, 302, 401, 402, 406, 407) de ladite unité de freinage (200, 300, 400), permettant un montage correct des flexibles hydrauliques sur ladite unité de freinage (205), ladite partie d'alignement (274) étant une partie plane alignée parallèlement à une première face latérale (203) de ladite partie de corps (204) et ladite partie d'alignement (274) étant prévue à une première distance (290) de ladite première face latérale (203).

2. Véhicule à moteur (100) selon la revendication 1, dans lequel lesdits deux ou plusieurs espaces de logement de tuyaux hydrauliques (275, 280, 375, 380) comprennent un ou plusieurs espaces de logement de tuyaux hydrauliques d'entrée (275, 375) et un ou plusieurs espaces de logement de tuyaux hydrauliques de sortie (280, 380),
ledit ou lesdits espaces de logement de tuyaux hydrauliques d'entrée (275, 375) et ledit ou lesdits espaces de logement de tuyaux hydrauliques de sortie (280, 380) étant adaptés pour loger ledit ou lesdits flexibles de frein d'entrée (260, 360) et ledit ou lesdits flexibles de frein de sortie (260, 360) respectivement,
chacun desdits espaces de logement de tuyaux hydrauliques d'entrée (275, 375) et desdits espaces de logement de tuyaux hydrauliques de sortie (280, 380) définissant ledit chemin prédéterminé correspondant à chacun desdits un ou plusieurs flexibles de frein d'entrée (250, 350) et à chacun desdits un ou plusieurs flexibles de frein de sortie (260, 360).

3. Véhicule à moteur (100) selon la revendication 2, dans lequel ledit ou lesdits flexibles de frein d'entrée (250, 350) incluent une première partie d'extrémité et une deuxième partie d'extrémité (251, 351), ladite deuxième partie d'extrémité (251, 351) étant configurée pour avoir un profil structurel correspondant audit chemin défini par ledit ou lesdits espaces d'accueil de tuyau hydraulique d'entrée correspondants (275, 375) afin de loger ladite deuxième partie d'extrémité (251, 351), et
ledit tuyau de frein de sortie (260, 360) inclut une quatrième partie d'extrémité et une troisième partie d'extrémité (261, 361), ladite troisième partie d'extrémité (261, 361) étant configurée pour avoir un profil structurel correspondant audit chemin défini par ledit ou lesdits espaces de réception de tuyau hydraulique de sortie correspondants (275, 375) afin de loger ladite troisième partie d'extrémité (261, 361), et
chacune desdites secondes parties d'extrémité (251, 351) et chacune desdites troisièmes parties d'extrémité (261, 361) de chacun desdits flexibles de frein d'entrée (250, 350) et de chacun desdits flexibles de frein de sortie (260, 360) sont connectées respectivement à une unité de freinage (200, 300, 400).

4. Véhicule à moteur (100) selon la revendication 1, dans lequel ladite unité de freinage (200, 300, 400) inclut deux ou plusieurs orifices (201, 202, 301, 302, 401, 402, 406, 407), lesdits deux ou plusieurs orifices incluent un ou plusieurs orifices d'entrée (201, 301, 401, 402) et un ou plusieurs orifices de sortie (202, 302, 406, 407),
lesdits deux ou plusieurs orifices (201, 202, 301, 302, 401, 402, 406, 407) étant prévus à ladite première face latérale (203), ledit élément de support (205, 305, 405) recouvrant au moins partiellement ladite unité de freinage (200, 300, 400), et ladite partie d'alignement (274, 374) dudit élément de support (205, 305, 405) étant configurée pour aligner lesdits deux ou plusieurs espaces de logement de tuyaux hydrauliques (275, 280, 375, 380, 480, 481, 490, 491) avec lesdits deux ou plusieurs orifices correspondants (201, 202, 301, 303) de ladite unité de freinage (200, 300).

5. Véhicule à moteur (100) selon la revendication 3, dans lequel ladite unité de freinage (200, 300, 400) est une unité de commande de système de freinage antiblocage et chacun desdits un ou plusieurs flexibles de frein d'entrée (250, 350) ayant ladite première partie d'extrémité reliée à un maître-cylindre (235) et ladite deuxième partie d'extrémité (251, 351) étant reliée à ladite unité de freinage (200, 300), et chacun desdits un ou plusieurs flexibles de frein de sortie (261, 361) ayant ladite quatrième partie d'extrémité reliée à un étrier de frein (215) et ladite troisième partie d'extrémité (261, 361) reliée à ladite unité de freinage (200, 300, 400), ladite deuxième partie d'extrémité (251, 351) et ladite troisième partie d'extrémité (261, 361) étant configurées pour avoir un profil différent.

6. Véhicule à moteur (100) selon la revendication 3, dans lequel ledit ou lesdits espaces de logement de tuyau hydraulique d'entrée (275, 375) sont différents dudit ou desdits espaces de logement de tuyau hydraulique de sortie (280, 380), et
dans lequel chacun dudit ou desdits espaces de logement de tuyau hydraulique d'entrée (275, 375) ne reçoit que ledit tuyau de frein d'entrée correspondant (250, 350), et
dans lequel chacun dudit ou desdits espaces de logement de tuyau hydraulique de sortie (280, 380) ne reçoit que ledit tuyau de frein de sortie correspondant (260, 360).

7. Véhicule à moteur (100) selon la revendication 1, dans lequel ledit élément de support (205, 305, 405) est au moins une d'une structure fermée ou une structure ouverte, et ledit élément de support (205, 305, 405) étant composé d'un matériau rigide incluant au moins une feuille, forme extrudée, forme empreinte ou forme moulée.

8. Véhicule à moteur (100) selon la revendication 1, dans lequel ladite unité de freinage (200, 300) est montée sur un tube principal (112) de l'élément de châssis (102), ledit tube principal (112) s'étendant vers l'arrière à partir d'un tête guidon (111) de l'élément de châssis (102) et s'étendant vers le bas en entourant au moins partiellement le moteur à combustion interne (101), et ladite unité de freinage (200) est disposée à l'arrière dudit moteur à combustion interne (101).

9. Véhicule à moteur (100) selon la revendication 1, dans lequel lesdits deux ou plusieurs espaces de logement de tuyaux hydrauliques (275, 375, 280, 380, 480, 481, 490, 491) sont formés par un évidement, une fente, un trou, un trou allongé, un guide ou une combinaison de ceux-ci.

10. Élément de support (205, 305, 405) avec unité de freinage (200, 300, 400) pour un véhicule à moteur (100) selon la revendication 1, **caractérisé en ce que** ledit élément de support comprend:
une partie de support (221), ladite partie de support (221) étant configurée pour supporter l'unité de freinage (200, 300, 400) dudit véhicule à moteur (100), permettant ainsi l'utilisation d'orifices hydrauliques de diamètre identique ; et
une partie d'alignement (274, 374), ladite partie d'alignement (274, 374) étant pourvue de deux ou plusieurs espaces de logement de tuyaux hydrauliques (275, 280, 375, 380, 480, 481, 490, 491), ladite partie d'alignement (274) étant une partie plane alignée parallèlement à une première face latérale (203) de ladite partie de corps (204) et ladite partie d'alignement (274) étant prévue à une première distance (290) de ladite première face latérale (203),
ladite partie de support (221) étant formée d'un seul tenant avec ladite partie d'alignement (274, 374).

11. Élément de support (221) avec l'unité de freinage (200, 300, 400) selon la revendication 10, dans lequel lesdits deux ou plusieurs espaces de logement de tuyaux hydrauliques (275, 280, 375, 380) incluent un ou plusieurs espaces de logement de tuyaux hydrauliques d'entrée (275, 375) et un ou plusieurs espaces de logement de tuyaux hydrauliques de sortie (280, 380), et chacun desdits un ou plusieurs espaces de logement de tuyaux hydrauliques d'entrée (275, 375) comprend un profil différent du profil de chacun desdits un ou plusieurs espaces de logement de tuyaux hydrauliques de sortie (280, 380).
